Europäisches Patentamt

European Patent Office

Office européen des brevets

(19)

(11) Veröffentlichungsnummer: **0 002 729**
**B1**

(12) EUROPÄISCHE PATENTSCHRIFT

(45) Veröffentlichungstag der Patentschrift:
07.01.81

(51) Int. Cl.³: **F 16 L 21/08**

(21) Anmeldenummer: 78101664.7

(22) Anmeldetag: 13.12.78

(54) **Muffen-Rohrformstück für Luftheizungsleitungen od.dgl.**

(30) Priorität: **15.12.77 DE 2756024**

(43) Veröffentlichungstag der Anmeldung:
**11.07.79 Patentblatt 79/14**

(45) Bekanntmachung des Hinweises auf die Patenterteilung:
**07.01.81 Patentblatt 81/1**

(84) Benannte Vertragsstaaten:
**BE FR GB IT NL SE**

(56) Entgegenhaltungen:
**DE-A-1 659 516**
**DE-A-1 947 718**
**DE-C-624 074**
**GB-A-450 050**
**US-A-1 824 838**
**US-A-2 391 761**

(73) Patentinhaber: **Philipp Kreis GmbH & Co.**
**TRUMA-Gerätebau, Neumarkter Strasse 34-36,**
**D-8000 München 80 (DE)**

(72) Erfinder: **Kreis, Philipp, Neumarkter Strasse 34-36,**
**D-8000 München 80 (DE)**

(74) Vertreter: **Hain, Leonhard, Dipl.-Ing., Tal 18/IV,**
**D-8000 München 2 (DE)**

## Muffen-Rohrformstücke für Luftheizungsleitungen oder dergleichen.

Die Erfindung betrifft ein Muffen-Rohrformstück für Luftheizungsleitungen od. dgl. Luftleitungen mit mindestens einer radialen Klemmbohrung im Muffenmantel zum Eindrücken eines stiftförmigen Befestigungselementes unter Reibung, dessen Spitze in das Material eines in die Muffe eingesteckten Rohrendes eindringt.

Bei Luftleitungen, die wie Heizungsleitungen nur mit geringem Überdruck arbeiten und daher an die Abdichtung keine besonderen Anforderungen stellen, ist es besonders wünschenswert, die Rohrverbindungen leicht montierbar und falls zweckmässig, auch wieder leicht lösbar auszubilden. Vor allem soll die Montage ohne Fachkenntnisse und ohne Hilfsmittel ausgeführt werden können. Bei einer bekannten Rohrverbindung (US-A1824838) sind die ineinandergesteckten Rohrenden durch radiale Stifte miteinander verbunden. In den Rohrenden sind dazu radiale Löcher vorhanden, in die die Stifte zunächst eingesetzt und dann weiter eingetrieben werden. Bei einer anderen bekannten Muffen-Rohrverbindung (US-A2245101) sind im Muffenmantel durch angeformte Höcker verlängerte Bohrungen ausgebildet, durch die stiftförmige Befestigungselemente eingesetzt sind, die mit ihren Spitzen in das in die Muffe eingesteckte Rohrende eindringen. Die bekannten Befestigungsstifte werden mittels Reibung in den Bohrungen gehalten, die zu diesem Zweck entsprechende Durchmesser aufweisen. Die Länge der Stifte ist jeweils der Bohrungslänge so angepasst, weshalb die eingedrückten Stifte nicht mehr aus den Bohrungen herausragen. Zum Eintreiben der Stifte ist ein Hilfswerkzeug erforderlich, weil auf die kopflosen Stifte mit den Fingern nicht die erforderliche Kraft ausgeübt werden kann. Dadurch ist diese Montage auch nur an gut zugänglichen Stellen möglich. In Wohnwagen od. dgl. fahrbaren Räumen sind diese Voraussetzungen in der Regel nicht gegeben. Schliesslich lassen sich die eingetriebenen Stifte nicht mehr lösen, weshalb auch die Rohrverbindung nicht mehr getrennt werden kann.

Der Erfindung liegt daher die Aufgabe zugrunde, ein Muffen-Rohrformstück zu schaffen, das das Einbringen von Befestigungselementen wesentlich vereinfacht und auch an schwer zugänglichen Verlegungsstellen der Leitungen ermöglicht.

Zur Lösung dieser Aufgabe ist ein Muffen-Rohrformstück der eingangs genannten Art gemäss der Erfindung dadurch gekennzeichnet, dass der Klemmbohrung oder einer durchstossbaren Zwischenwand im Muffenmantel eine äussere Führungsbohrung zugeordnet und als Befestigungselement ein Druckstift mit einer reissnagelähnlichen Druckplatte, die das Eindrücken des Stiftes von Hand zulässt, vorgesehen ist, wobei der Durchmesser der Führungsbohrung gleich oder geringfügig grösser und der Durchmesser der Klemmbohrung etwas kleiner als der Durchmesser des Schaftes des Druckstiftes ist.

Vorteilhaft ist die Führungsbohrung durch einen kegelstumpfförmigen Übergang von der Klemmbohrung abgesetzt.

Zweckmässig wird das Muffen-Rohrformstück montagefertig gemacht und mit in den Bohrungen sitzenden Druckstiften ausgerüstet.

Die erfindungsgemässen Führungsbohrungen, von denen in der Regel an einer Muffe zwei diametral gegenüberliegend angeordnet sind, verlängern die Klemmbohrungen bzw. die durchstossbaren Zwischenwände um einen erweiterten Kanal, durch den das Einstecken der Druckstifte wesentlich erleichtert wird, sei dies nun bei der Montage an ungünstigen Verlegungsstellen oder bei der Vormontage beim Hersteller. Ist das Rohrformstück aus einem etwas elastischen Kunststoff, dann wird der Klemmabschnitt so eng sein, dass der Druckstift darin haftet und nicht von selbst herausfällt. Auf diese Weise besteht die Möglichkeit, die Druckstifte, die handelsübliche Reissnägel sein können, schon vor der Auslieferung des Formstückes in die Kanäle einzuführen, wo sie festsitzen und bei Montage nur von Hand in das in die Muffe eingesteckte Rohrende eingedrückt werden müssen. Durch die Absetzung des Kanales in im Durchmesser unterschiedliche Bohrungen können die Kanäle schon bei der Formung der Formstücke in solcher Länge und mit solcher Toleranzgenauigkeit eingeformt werden, dass die Bohrungen die zugedachten Aufgaben bestens erfüllen können.

Weitere Einzelheiten und Merkmale der Erfindung sind der nachfolgenden Beschreibung von Ausführungsbeispielen, die in der Zeichnung dargestellt sind, zu entnehmen. Es zeigen:

Fig. 1 einen Längsschnitt durch ein erstes Muffen-Formstück und

Fig. 2 einen Längsschnitt durch einen Teil des Muffenmantels mit einer anderen Kanalausbildung.

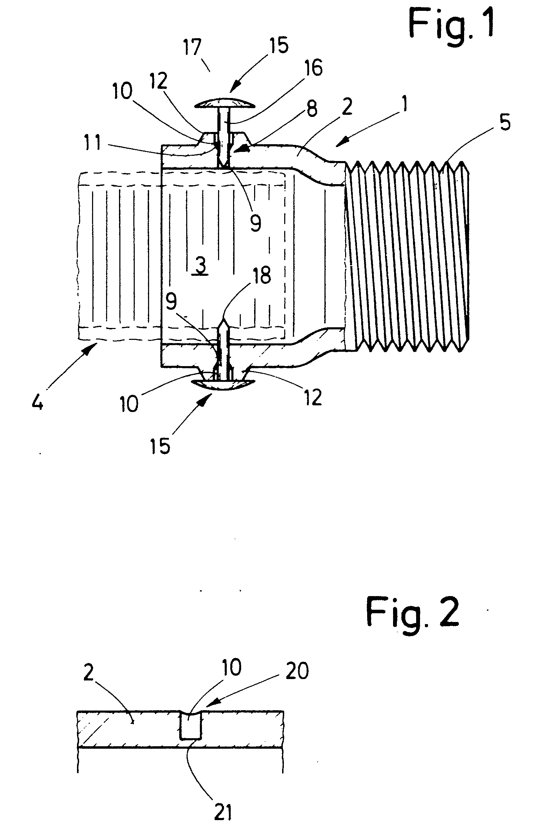

Ein Rohrformstück 1 weist einen Muffenmantel 2 zum Überstecken auf ein gestrichelt gezeichnetes Ende 3 eines flexiblen Metallschlauches 4 und einen Gewindestutzen 5 zum Anschluss einer weiteren Armatur od. dgl. auf. Um das Rohrende 3 einfach und sicher in der Muffe zu befestigen, sind im Muffenmantel beispielsweise zwei diametral gegenüberliegende Bohrungen 8 ausgebildet. Gemäss Fig. 1 besteht diese Bohrung aus einer inneren engeren Klemmbohrung 9 und einer dagegen abgestuften äusseren Führungsbohrung 10. Der Übergang 11 zwischen den beiden Bohrungen ist zweckmässig kegelstumpfförmig gestaltet. Reicht die Wanddicke des Muffenmantels 2 nicht für eine notwendige Kanallänge aus, dann ist der Muffenmantel an dieser Stelle um einen Höcker 12 verstärkt. Die Führungsbohrung 10, die zum Einführen und Zentrieren eines Druckstiftes 15 dient, ist im Durchmesser gleich oder etwas grösser als der Durchmesser eines Schaftes 16 des Druckstiftes 15. Der Durchmesser der inneren engeren Klemmbohrung 9 ist etwas kleiner und unterschreitet den Stiftschaftdurchmesser mehr oder weniger, so dass ein eingesteckter Druckstift darin eingeklemmt festsitzt. In Fig. 1 ist der Druckstiftschaft 16 mit einer Spitze 18 mit einem verhältnismässig grossen Kegelwinkel versehen.

Bei einer derart ausgebildeten Mantelbohrung kann der Druckstift 15 bereits vor der Montage in einer Bereitschaftsstellung, wie sie Fig. 1 an der oberen Hälfte zeigt, gebracht werden. Dies kann beim Formstückhersteller maschinell geschehen und die Muffe mit den zugehörigen Stiften kann dann gebrauchsfertig ausgeliefert werden. Um dann eine Rohrmontage auszuführen, braucht nur das Rohrende 3 in die Muffe eingesteckt und der bzw. die im Muffenmantel bereitgestellten Druckstifte 15 von Hand bis zum Anschlag in die Kanäle eingedrückt zu werden, wobei die Spitze 18 des Stiftes am Rohrende angreift und es auch durchdringt (Fig. 1 untere Hälfte). Damit die Druckstifte 15 mit einem Finger eingedrückt werden können, ist eine Druckplatte 17 vorhanden, die in Eindrückstellung zugleich den Anschlag bildet. Da diese Druckplatte den Höcker seitlich überragen wird, kann der Druckstift auch wieder gut erfasst und herausgezogen werden. Als Druckstift eignet sich ein handelsüblicher Reissnagel recht gut.

Bei einer abgeänderten Befestigungsbohrung 20 entspricht die Führungsbohrung der der Fig. 1. Anstelle der Klemmbohrung ist in diesem Fall eine geschlossene Zwischenwand 21 vorgesehen, deren Wandstärke nur so dick ist, dass sie von dem Druckstift ohne besondere Kraftanwendung durchstossen werden kann. Die Zwischenwand kann innen mit der Muffeninnenfläche bündig oder dazu nur wenig zurückversetzt sein. Auch in diesem Falle kann ein Höcker zweckdienlich sein.

Die Bohrungen können auch eine von der Kreisform abweichende Querschnittsform aufweisen. Auch müssen sie nicht zylindrisch sein. Allerdings darf bei einer konischen Gestaltung der Bohrungen der Kegelwinkel nicht so gross sein, dass dadurch die selbsthemmende Wirkung des Druckstiftes beeinträchtigt wird.

## Patentansprüche:

1. Muffen-Rohrformstück für Luftheizungsleitungen od. dgl. Luftleitungen mit mindestens einer radialen Klemmbohrung im Muffenmantel zum Eindrücken eines stiftförmigen Befestigungselementes unter Reibung, dessen Spitze in das Material eines in die Muffe eingesteckten Rohrendes eindringt, dadurch gekennzeichnet, dass der Klemmbohrung (9) oder einer durchstossbaren Zwischenwand (21) im Muffenmantel (2) eine äussere Führungsbohrung (10) zugeordnet und als Befestigungselement ein Druckstift (15) mit einer reissnagelähnlichen Druckplatte (17), die das Eindrücken des Stiftes von Hand zulässt, vorgesehen ist, wobei der Durchmesser der Führungsbohrung (10) gleich oder geringfügig grösser und der Durchmesser der Klemmbohrung (9) etwas kleiner als der Durchmesser des Schaftes (16) des Druckstiftes (15) ist.

2. Muffen-Rohrformstück nach Anspruch 1, dadurch gekennzeichnet, dass die Führungsbohrung (10) durch einen kegelstumpfförmigen Übergang von der Klemmbohrung (9) abgesetzt ist.

3. Muffen-Rohrformstück nach einem der Ansprüche 1 oder 2, dadurch gekennzeichnet, dass es montagefertig mit in Bohrungen (9, 10) sitzenden Druckstiften (15) ausgerüstet ist.

## Claims

1. Sleeve-type pipe connection for air heating pipes or other pipes comprising at least one radial clamping-bore in the sleeve wall for pressing in a pin-shaped fastening-element under friction the top of the fastening-element entering into the material of a pipe end projected into the sleeve characterised in that the clamping-bore (9) or a perforatable intermediate wall (21) in the sleeve wall (2) is associated with an external guiding-bore (10) and that as fastening-element a pin (15) with a drawing-pin like pressure plate (17) which permits the pressing in of the pin by hand is provided the diameter of the guiding-bore (10) being of the same size or a little larger and the diameter of the clamping-bore (9) being a little smaller than the diameter of the shaft (16) of the pressure pin (15).

2. Pipe connection according to claim 1, characterised in that the guiding-bore (10) is graduated from the clamping-bore (9) by a cone-shaped passage.

3. Pipe connection according to claim 1 or 2, characterised in that it is ready to be mounted and provided with the pins (15) disposed within the bores (9, 10).

## Revendications

1. Raccord tubulaire à manchon pour tuyaux de chauffage par air ou autres tuyauteries d'air, comportant au moins un trou radial de blocage dans la jupe du manchon pour l'enfoncement par friction d'un élément de fixation en forme de broche, dont la pointe pénètre dans la matière d'une extrémité de tube engagée dans le manchon, caractérisé en ce que le trou de blocage (9) ou une paroi intercalaire perforable (21) de la jupe (2) du manchon est associé à un trou extérieur de guidage (10), et en ce qu'il est prévu comme élément de fixation, une broche enfonçable par pression (15) pourvue d'une plaque de pression (17) à la façon d'un clou à tête plate et qui permet l'enfoncement de la broche à la main, le diamètre du trou de guidage (10) étant égal ou légèrement supérieur, et le diamètre du trou de blocage (9) légèrement inférieur, au diamètre de la tige (16) de ladite broche (15).

2. Raccord tubulaire à manchon selon la revendication 1, caractérisé en ce que le trou de guidage (10) est décalé par rapport au trou de blocage (9) à l'aide d'une zone de transition de forme tronconique.

3. Raccord tubulaire à manchon selon l'une des revendications 1 ou 2, caractérisé en ce qu'il est équipé, prêt pour le montage, de broches (15) logées dans les trous (9, 10).

# Fig. 1

# Fig. 2